# EUROPÄISCHE PATENTSCHRIFT

(11) **EP 2 420 413 B1**
(45) Veröffentlichungstag und Bekanntmachung des Hinweises auf die Patenterteilung: **23.04.2014**
(21) Anmeldenummer: 11152077.1
(22) Anmeldetag: 25.01.2011
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 22.02.2012
(73) Patentinhaber: Metalsa Automotive GmbH, 51702 Bergneustadt (DE)
(72) Erfinder: Beki, Gürkan, 51766, Engelskirchen (DE); Hellweg, Dr. Hans-Bernd, 53819, Neunkirchen-Seelscheid (DE)
(74) Vertreter: Kalkoff & Partner

(56) Entgegenhaltungen:
- EP-A1- 1 277 647
- EP-A1- 1 288 079
- DE-A1- 19 501 522

## Beschreibung

Die Erfindung betrifft ein Überrollschutzsystem für Kraftfahrzeuge, mit
- einem aus einer Ruhelage in eine Überschlagsposition verlagerbaren Überrollkörper und
- eine den Überrollkörper im Gefahrenfall aus der Ruhelage in die Überschlagsposition verstellende Antriebseinheit mit einem eine zur Verstellung des Überrollkörpers notwendige Antriebsenergie aufweisenden Antriebsenergiespeicher.

Aktive Überrollschutzsysteme der Eingangs genannten Art sind in vielfältigen Ausgestaltungen aus dem Stand der Technik bekannt. Sie dienen bei Cabriolets aller Art zum Schutz der Insassen bei einem Überschlag, wobei die in der Überschlagsposition aufgestellten Überrollkörper den Insassen einen Überlebensraum bereitstellen, wenn das Fahrzeug auf den aufgestellten Überrollkörpern abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, weisen moderne Kraftfahrzeuge vermehrt sogenannte aktive Überrollschutzsysteme auf, bei denen der Überrollkörper im Normalzustand in einer im Wesentlichen unsichtbaren Ruhelage befindlich ist und nur im Gefahrenfall, nämlich bei einem drohenden Überschlag, eine Verlagerung des Überrollkörpers in die Überschlagsposition stattfindet.

Überrollkörper, die hinter den Fahrzeugsitzen angeordnet sind und sich im Falle eines Überschlags selbsttätig aufstellen, stellen dabei eine bevorzugte Ausführungsform eines aktiven Überrollschutzsystems dar. Der Überrollkörper befindet sich dabei in der Ruhelage in Wirkverbindung mit einer Antriebseinheit, die im Bedarfsfall sensorgesteuert eine Verlagerung des Überrollkörpers aus der Ruhelage bewirkt. Zur Bereitstellung der Antriebsenergie, d. h. als Antriebsenergiespeicher der Antriebseinheit, dient dabei in der Regel ein Federsystem, wobei der Überrollkörper in der Regel in der Ruhelage durch das Federsystem vorgespannt ist und gegenüber der Vorspannung an einem Gehäuse des Überrollschutzsystems, bspw. einer Kassette, arretiert ist. Eine Auflösung der Arretierung bewirkt dann aufgrund der Federvorspannung eine unmittelbare Verstellung des Überrollkörpers in die Überschlagsposition.

Die Ausgestaltung bekannter Überrollschutzsysteme macht zwingend die Verwendung eines den Überrollkörper aufnehmenden Gehäuses erforderlich, welches sowohl zur Festlegung der Position des Überrollkörpers gegenüber der Antriebseinheit als auch zur Arretierung des Überrollkörpers in der Ruhelage dient. Darüber hinaus ermöglicht erst die Verwendung eines Gehäuses für das Überrollschutzsystem dessen Handhabbarkeit und Montierbarkeit als Baueinheit, welche sich an hierfür vorgesehenen Positionen an der Rohbaustruktur des Kraftfahrzeugs einsetzen und befestigen lässt.

Die erforderliche Verwendung eines üblicherweise kassettenartigen, d. h. den Überrollkörper und die Antriebseinheit umgreifenden Gehäuses, weist jedoch den Nachteil auf, dass derartige Überrollschutzsysteme einen erheblichen Bauraum an der Rohbaustruktur beanspruchen, an der hierfür entsprechende Aufnahmen vorgesehen werden müssen. Da diese Aufnahmen die Festigkeit der Rohbaustruktur negativ beeinflussen, ist es erforderlich, konstruktive jedoch kostenintensive Anpassungen vorzunehmen, durch die die erforderlichen Festigkeitseigenschaften erreicht werden. Darüber hinaus bedingt die Verwendung eines Gehäuses zur Bildung des Überrollschutzsystems ein erhöhtes Gewicht sowie einen höheren Fertigungsaufwand.

Das Dokument EP 1 288 079 offenbart ein Überrollschutzsystem nach dem Oberbegriff von Anspruch 1.

Der Erfindung liegt die Aufgabe zu Grunde, ein Überrollschutzsystem der Eingangs genannten Art bereitzustellen, welches sich in einfacher Weise am Fahrzeug anordnen lässt, ein geringes Gewicht aufweist sowie einen nur geringen Bauraum beansprucht.

Die Erfindung löst die Aufgabe durch ein Überrollschutzsystem mit den Merkmalen des Anspruchs 1.

Kennzeichnend für das erfindungsgemäße Überrollschutzsystem ist, dass das Gehäuse den Überrollkörper nicht umgreift.

Wesentlich für das erfindungsgemäße Überrollschutzsystem ist die Ausgestaltung des Gehäuses der Antriebseinheit derart, dass es eine montagestabile Anordnung des Überrollkörpers an der Antriebseinheit ermöglicht. Hierdurch kann die Antriebseinheit mit dem Überrollkörper verbunden und diese relativ zueinander festgelegt werden, so dass auf weitere Bauteile, bspw. ein den Überrollkörper umgreifendes kassettenartiges Gehäuse, wie dies aus dem Stand der Technik bekannt ist, verzichtet werden kann.

Unter einer montagestabilen Verbindung wird dabei im Rahmen der Erfindung eine Verbindung von Überrollkörper und Antriebseinheit verstanden, die derart ausgebildet ist, dass die Verbindung zwischen dem Überrollkörper und der Antriebseinheit nach deren Montage aneinander während des gesamten nachfolgenden Transports sowie der Montage am Fahrzeug bestehen bleibt, jedoch im Gefahrenfall eine Verlagerung nicht blockiert.

Die montagestabile Verbindung kann ferner auch dazu genutzt werden, um auch im Fahrbetrieb des Kraftfahrzeuges den Überrollkörper über die Antriebseinheit in seiner Position zu sichern, so dass auf ergänzende Lagesicherungsmaßnahmen zur Vermeidung von Relativbewegungen des Überrollkörpers gegenüber der Antriebseinheit, welche bspw. zu Klappergeräuschen führen können, verzichtet werden kann. Die montagestabile Verbindung ermöglicht es darüber hinaus im Bedarfsfall, den Überrollkörper in einfacher Weise von der Antriebseinheit zu trennen, bspw., wenn dies zu Wartungszwecken erforderlich ist.

Das erfindungsgemäße Überrollschutzsystem weist den Vorteil auf, dass es insgesamt einen nur sehr geringen, nämlich durch die Antriebseinheit und den Überrollkörper bedingten Bauraum aufweist, so dass die Rohbaustruktur insgesamt bei gleichbleibender Festigkeit wesentlich einfacher ausgeführt werden kann. Gegenüber bekannten Überrollschutzsystemen wird zudem das Gewicht und der Montageaufwand am Kraftfahrzeug reduziert. Zur Anordnung des Überrollschutzsystems muss dieses lediglich an hierfür vorgesehener Stelle der Rohbaustruktur angeordnet und anschließend die Antriebseinheit mit der Rohbaustruktur verbunden werden, wobei die Verbindung zwischen der Rohbaustruktur und der Antriebseinheit bzw. deren Gehäuse entsprechend der zu erwartenden Belastungen frei gewählt werden kann. Eine besonders komfortable Verbindung stellt dabei eine anforderungsgemäße Verschraubung der Antriebseinheit mit der Rohbaustruktur dar.

Eine Übertragung der Antriebsenergie auf den Überrollkörper kann in beliebiger Weise erfolgen, wobei bei entsprechender Ausgestaltung von Antriebseinheit und Überrollkörper auch eine unmittelbare Kraftübertragung möglich ist. Die Antriebsenergie kann jedoch auch über einen Antriebskörper erfolgen, der durch den Antriebsenergiespeicher angetrieben die Ausfahrbewegung auf den Überrollkörper überträgt. Der Antriebskörper ist dabei in der Regel Bestandteil der Antriebseinheit, er kann jedoch auch durch ein mit dem Überrollkörper verbundenes und mit der Antriebseinheit in Eingriff befindliches Bauteil gebildet sein.

Die Ausgestaltung der montagestabilen Verbindung zwischen dem Überrollkörper und dem Gehäuse der Antriebseinheit kann grundsätzlich in beliebiger Weise erfolgen, sofern die gewählte Ausgestaltung gewährleistet, dass der Überrollkörper relativ gegenüber der Antriebseinheit festgelegt ist und im Gefahrenfall die Verlagerung in die Überschlagsposition zuverlässig erfolgen kann. So kann gemäß einer möglichen Ausgestaltung der Erfindung das Gehäuse der Antriebseinheit bspw. eine an den Überrollkörper angepasste Gestalt aufweisen, die eine kraftschlüssige Verbindung mit dem Überrollkörper oder Abschnitten des Überrollkörpers erlaubt.

Gemäß einer vorteilhaften Weiterbildung der Erfindung ist der Überrollkörper jedoch über ein sich in einem Bereich zwischen dem Gehäuse der Antriebseinheit und dem Überrollkörper erstreckendes Verbindungsmittel montagestabil mit der Antriebseinheit verbunden. Gemäß dieser Ausgestaltung der Erfindung verläuft das Verbindungsmittel zwischen dem Überrollkörper einerseits und dem Gehäuse der Antriebseinheit andererseits. Das Verbindungsmittel sichert dabei die Lage des Überrollkörpers relativ zur Antriebseinheit und gewährleistet gleichzeitig, dass im Falle eines Überschlags der Überrollkörper zuverlässig in die Überschlagsposition verstellt werden kann. Die Ausgestaltung der Verbindungsmittel ist dabei grundsätzlich, wie auch deren Ausrichtung, frei wählbar, wobei besonders bevorzugt sich das Verbindungsmittel zwischen einander gegenüberliegenden Abschnitten des Gehäuses der Antriebseinheit einerseits und dem Überrollkörper andererseits erstreckt, wodurch eine besonders kompakte Ausgestaltung des Überrollschutzsystems erreicht werden kann.

Grundsätzlich besteht die Möglichkeit, den Überrollkörper im Wesentlichen über die gesamte Länge des Gehäuses der Antriebseinheit - in Längsachsenrichtung des Überrollkörpers betrachtet - mit dem Überrollkörper zu verbinden. Nach einer besonders vorteilhaften Ausgestaltung der Erfindung erstrecken sich die Verbindungsmittel jedoch nur über einen Teilbereich des Überrollkörpers und/oder der Antriebseinheit bzw. des Gehäuses der Antriebseinheit. Eine entsprechende Ausgestaltung, die zum einen gewährleistet, dass der Überrollkörper montagestabil an der Antriebseinheit angeordnet ist und zum anderen eine zuverlässige Verlagerung des Überrollkörpers in die Überschlagsposition zulässt, ermöglicht eine besonders kompakte sowie materialsparende Bauweise.

Wie bereits zuvor ausgeführt, ist die Ausgestaltung der Verbindungsmittel frei wählbar, sofern die vorgenannten Eigenschaften einer montagestabilen Verbindung erzielt werden. Nach einer Weiterbildung der Erfindung ist das Gehäuse der Antriebseinheit und/oder der Überrollkörper jedoch zur Aufnahme von einem an dem Überrollkörper und/oder dem Gehäuse der Antriebseinheit angeordneten Vorsprung ausgebildet. Der Vorsprung dient dabei gemeinsam mit einer entsprechenden Ausgestaltung an der Antriebseinheit oder dem Überrollkörper zur Aufnahme des Vorsprungs als Verbindungsmittel zur Festlegung des Überrollkörpers an der Antriebseinheit. Der Vorsprung kann dabei integraler Bestandteil der Antriebseinheit oder des Überrollkörpers sein oder auch durch geeignete Maßnahmen an dem Überrollkörper oder der Antriebseinheit angeordnet werden. Ein Vorsprung lässt sich besonders einfach ausgestalten und ermöglicht über seine Form überdies eine Festlegung des Abstands des Überrollkörpers zur Antriebseinheit. Somit kann in besonders einfacher und kostengünstiger Weise eine Ausrichtung des Überrollkörpers gegenüber dem Gehäuse der Antriebseinheit bzw. der Antriebseinheit erfolgen, wobei im Falle bspw. anklippsbarer Vorsprünge an der Antriebseinheit oder dem Überrollkörper eine einfache Justierbarkeit des Überrollkörpers gegenüber der Antriebseinheit möglich ist.

Nach einer besonders vorteilhaften Ausgestaltung der Erfindung ist der Vorsprung in einer in Verstellrichtung des Überrollkörpers längskanalisierten, sich über einen Teilbereich des Gehäuses der Antriebseinheit erstreckenden Aufnahme angeordnet. Bei einer entsprechenden Ausgestaltung der Erfindung ist der Vorsprung, ggf. unter Zuhilfenahme geeigneter Klemmmittel, kraft-, form- und/oder stoffschlüssig in der Aufnahme angeordnet, um eine relative Festlegung des Überrollkörpers an der Antriebseinheit zu gewährleisten. Die Längskanalisierung, welche in Verstellrichtung des Überrollkörpers verläuft, weist dabei den Vorteil auf, dass durch diese eine Führung des Überrollkörpers gegenüber der Antriebseinheit im Bereich des Zusammenwirkens von Vorsprung und Aufnahme erfolgt. Insofern wird durch eine entsprechende Ausgestaltung zum einen eine zuverlässige Festlegung des Überrollkörpers an der Antriebseinheit gleichzeitig aber auch eine sichere sowie gerichtete Verlagerungsmöglichkeit im Gefahrenfall gewährleistet.

Gemäß einer weiteren Ausgestaltung der Erfindung weist die Antriebseinheit eine Führungshülse auf, die zur Aufnahme eines mit dem Überrollkörper verbundenen Kopplungselements ausgebildet ist. Eine freie Verschiebbarkeit des Kopplungselements in der sich in Verstellrichtung erstreckenden Führungshülse gewährleistet zuverlässig, dass im Gefahrenfall eine Verlagerung des Überrollkörpers in die Überschlagsposition erfolgt. Die Führungshülse kann dabei zusätzlich zu weiteren Verbindungsmitteln eingesetzt werden, so dass insgesamt eine montagestabile Verbindung hergestellt werden kann, bei der auch die Führungshülse als Verbindungsmittel dient. Gemäß einer besonders vorteilhaften Ausgestaltung der Erfindung ist ein Antriebskörper vorgesehen, der in der sich über einen Teilbereich des Überrollkörpers erstreckenden Führungshülse angeordnet ist, so dass im Falle einer Auslösung der Antriebseinheit der Antriebskörper angetrieben wird und unmittelbar seine Bewegungsenergie innerhalb der Führungshülse auf das Kopplungselement überträgt. Im Falle der Verwendung eines an dem Überrollkörper angeordneten Kopplungselements, welches innerhalb der Führungshülse gelagert ist, kann, bei einer entsprechenden Auswahl des Antriebsenergiespeichers, auch auf einen separaten Antriebskörper verzichtet werden, so dass die Antriebsenergie unmittelbar auf das Kopplungselement wirkt.

Nach einer weiteren Ausgestaltung der Erfindung sind an dem Überrollkörper und/oder der Antriebseinheit Anschlagmittel zur Begrenzung der Ausfahrbewegung des Überrollkörpers angeordnet. Diese Ausgestaltung der Erfindung, wonach die maximale Ausfahrposition durch ein Zusammenwirken des Überrollkörpers mit der Antriebseinheit über Anschlagmittel bestimmt ist, ermöglicht es, auf separate Vorrichtungen zur Begrenzung der Ausfahrbewegung an der Rohbaustruktur zu verzichten. Das derart ausgebildete Überrollschutzsystem lässt sich somit in besonders einfacher Weise an der Rohbaustruktur anordnen, wobei lediglich eine Verbindung der Antriebseinheit mit der Rohbaustruktur, bspw. eine Verschraubung, erforderlich ist.

Zur Gewährleistung der Funktion des Überrollschutzsystems ist es grundsätzlich erforderlich, dass der Überrollkörper in der Überschlagsposition gegen eine Rückverlagerung gesichert ist, um die beim Überschlag auf den Überrollkörper wirkenden Lasten aufnehmen zu können. Eine hierfür erforderliche Verriegelung des Überrollkörpers kann bspw. an der Rohbaustruktur vorgesehen sein. Besonders vorteilhafter Weise sind jedoch an der Antriebseinheit Verriegelungsmittel zur Arretierung des Überrollkörpers in der Überschlagsposition ausgebildet. Eine entsprechende Ausgestaltung ermöglicht es bei einer entsprechend laststabilen Verbindung der Antriebseinheit bzw. dem Gehäuse der Antriebseinheit mit der Rohbaustruktur, auf eine Anpassung der Rohbaustruktur zu verzichten. Als Verriegelungsmittel können dabei grundsätzlich alle Ausgestaltungen verwendet werden, welche eine Rückverlagerung des Überrollkörpers in Richtung der Ruhelage verhindern. Besonders vorteilhafter Weise kann dies über eine an dem Überrollkörper angeordnete Zahnstange erfolgen, welche in der Überschlagsposition mit einem an der Antriebseinheit angeordneten Zahnstangenprofil in Eingriff gelangt.

Gemäß einer vorteilhaften Weiterbildung der Erfindung sind der Überrollkörpers und die Antriebseinheit derart miteinander in Eingriff, dass der Überrollkörper in der Ruhelage unbelastet durch die Antriebseinheit ist, so dass eine Anordnung des Überrollkörpers an der Antriebseinheit in besonders einfacher Weise erfolgen kann. Der Überrollkörper muss nicht entgegen einer Vorspannkraft, bspw. einer Federvorspannung, in eine Ruhelage verschoben und bspw. an der Antriebseinheit oder einer anderen Baugruppe, wie z. B. einem gemeinsamen Gehäuse, arretiert werden. Eine vorspannungsfreie Verbindung der Antriebseinheit mit dem Überrollkörper resultiert dabei im Wesentlichen daraus, dass die Antriebsenergie innerhalb der Antriebseinheit im Antriebsenergiespeicher festgelegt ist. Eine Freigabe der Antriebsenergie, durch die diese auf den Überrollkörper übertragen wird, erfolgt erst, wenn der Gefahrenfall eintritt, d. h. ein Überschlag droht bzw. stattfindet. Erst zu diesem Zeitpunkt erfolgt eine Kraftbeaufschlagung des Überrollkörpers durch die Antriebseinheit, wodurch der Überrollkörper in die Überschlagsposition verlagert wird. Bis zum Gefahrenfall ist der Überrollkörper jedoch unbelastet durch die Antriebseinheit, was eine besonders einfache Montage des Überrollkörpers an der Antriebseinheit ermöglicht.

Die Bereitstellung der Antriebsenergie, d. h. des Antriebsenergiespeichers, kann grundsätzlich in beliebiger Weise ausgeführt werden. So ist gemäß einer möglichen Ausgestaltung vorgesehen, dass innerhalb der Antriebseinheit eine Federvorspannung vorliegt, welche besonders bevorzugt gegenüber dem Gehäuse der Antriebseinheit gesichert ist, um eine vorzugsweise vorspannungsfreie Anordnung des Überrollkörpers zu ermöglichen. Im Gefahrenfall wird durch eine Auflösung der Verriegelung die Vorspannung freigegeben und auf den Überrollkörper, ggf. über einen Antriebskörper, übertragen.

Nach einer besonders vorteilhaften Ausgestaltung der Erfindung ist der Antriebsenergiespeicher jedoch durch einen Gasgenerator, insbesondere Mikrogasgenerator, gebildet. Zur Verwendung eines entsprechenden Gasgenerators weist das Gehäuse der Antriebseinheit einen Druckraum auf, in dem sich durch Aktivierung des Gasgenerators schlagartig ein Überdruck ausbildet, welcher zur Verlagerung des Überrollkörpers genutzt wird. Hierzu kann bspw. das vorzugsweise vorgesehene Kopplungselement des Überrollkörpers in den Druckraum hineinragen, so dass aufgrund der Druckerhöhung das Kopplungselement aus dem Druckraum herausbefördert wird und dabei den Überrollkörper in die Überschlagsposition verlagert.

Die der Erfindung zu Grunde liegende Aufgabe wird ferner durch eine Antriebseinheit für ein Überrollschutzsystem zur Verlagerung eines Überrollkörpers aus einer Ruhelage in eine Überschlagsposition, insbesondere zur Verwendung in einem Überrollschutzsystem wie vorstehend beschrieben, dadurch gelöst, dass ein Gehäuse der Antriebseinheit zur montagestabilen Anordnung des Überrollkörpers ausgebildet ist.

Wesentlich für die erfindungsgemäße Antriebseinheit ist dabei, dass das Gehäuse der Antriebseinheit auf den Überrollkörper abgestimmt ist und dessen Anordnung in montagestabiler Weise an dem Gehäuse ermöglicht. Eine montagestabile Verbindung zwischen der Antriebseinheit und dem Überrollkörper zur Bildung eines Überrollschutzsystems besteht dabei dann, wenn gewährleistet ist, dass die Verbindung zwischen der Antriebseinheit und dem Überrollkörper auch während der Montage des Überrollschutzsystems am Kraftfahrzeug bestehen bleibt, eine Verstellung im Gefahrenfall jedoch nicht behindert. Vorzugsweise ist die montagestabile Verbindung ferner dergestalt, dass Relativbewegungen im Normalbetrieb des Kraftfahrzeugs und damit einhergehende Klappergeräusche vermieden werden. Eine Anbindung des Überrollschutzsystems am Kraftfahrzeug erfolgt über eine Festlegung, bspw. Verschraubung, der Antriebseinheit an hierfür vorgesehener Stelle an der Rohbaustruktur.

Die Verwendung einer zur montagestabilen Anordnung ausgebildeten Antriebseinheit ermöglicht es, auf ein anderenfalls erforderliches Gehäuse zur Aufnahme der Antriebseinheit und des Überrollkörpers zur Bildung eines Überrollschutzsystems zu verzichten. Das Überrollschutzsystem kann somit gehäuse- bzw. kassettenfrei ausgebildet werden, so dass ein unter Verwendung der erfindungsgemäßen Antriebseinheit hergestelltes Überrollschutzsystem gegenüber bekannten Überrollschutzsystemen einen wesentlich geringeren Bauraum sowie ein geringeres Eigengewicht aufweist.

Aufgrund des geringen Bauraums ergeben sich Vorteile bei der Ausgestaltung einer Rohbaustruktur des Kraftfahrzeuges, welche in geringerem Maße an das Überrollschutzsystem angepasst werden muss, so dass sich eine erhöhte Festigkeit ergibt. Wesentlich für die Möglichkeit, auf ein Gehäuse zur Aufnahme des Überrollkörpers und der Antriebseinheit verzichten zu können, ist dabei die montagestabile Verbindung, durch die der Überrollkörper auch ohne ein zusätzliches Gehäuse relativ gegenüber der Antriebseinheit festgelegt ist, wobei die montagestabile Anordnung dergestalt ist, dass im Gefahrenfall die Antriebseinheit den Überrollkörper störungsfrei in die Überschlagsposition verlagern kann.

Nach einer besonders vorteilhaften Ausgestaltung der Antriebseinheit ist vorgesehen, dass das Gehäuse der Antriebseinheit zur Anbringung an einer Rohbaustruktur eines Kraftfahrzeugs ausgebildet ist. Gemäß dieser Weiterbildung kann auf ergänzende Verbindungsmittel zur Anordnung der Antriebseinheit bzw. des aus Antriebseinheit und Überrollkörper gebildeten Überrollschutzsystems verzichtet werden. Die Verbindung erfolgt allein über eine direkte Kopplung der Antriebseinheit mit der Rohbaustruktur des Kraftfahrzeugs, wobei das Gehäuse der Antriebseinheit, bspw. mit der Rohbaustruktur, vernietet oder verschraubt wird.

Gemäß einer besonders vorteilhaften Ausgestaltung der Erfindung ist ferner vorgesehen, dass an dem Gehäuse der Antriebseinheit Verriegelungsmittel zur Arretierung des Überrollkörpers in der Überschlagsposition ausgebildet sind. Diese Ausgestaltung der Erfindung, wonach die Antriebseinheit neben der Möglichkeit zur montagestabilen Anordnung ferner noch eine Arretierung des Überrollkörpers in der Überschlagsposition erlaubt, ermöglicht es, im Bereich der Rohbaustruktur auf entsprechende Ausgestaltungen zur Festlegung des Überrollkörpers in der Überschlagsposition zu verzichten. Im Überschlagsfall auf den Überrollkörper wirkende Kräfte werden in Verstellrichtung des Überrollkörpers über das Gehäuse der Antriebseinheit und dessen bestehende Verbindung mit der Rohbaustruktur übertragen, so dass auf ergänzende Maßnahmen an der Rohbaustruktur verzichtet werden kann.

Die erfindungsgemäße Antriebseinheit weist einen Antriebsenergiespeicher zur Verlagerung des Überrollkörpers in die Überschlagsposition auf. Eine Übertragung der Antriebsenergie auf den Überrollkörper kann dabei in beliebiger Weise erfolgen, wobei auch eine unmittelbare Übertragung der Antriebsenergie auf geeignete Bauteile des Überrollkörpers bei entsprechender Anordnung an dem Gehäuse der Antriebseinheit möglich ist. Nach einer besonders vorteilhaften Ausgestaltung der Erfindung weist die Antriebseinheit jedoch einen mit dem Überrollkörper in Eingriff bringbaren, diesen in der Ruhelage nicht belastenden und durch einen Antriebsenergiespeicher antreibbaren Antriebskörper auf. Gemäß dieser Ausgestaltung der Erfindung weist die Antriebseinheit einen separaten Antriebskörper auf, welcher erst im Gefahrenfall aufgrund der Energie des Antriebsenergiespeichers verlagert wird. In der Ruhelage ist der Antriebskörper an der Antriebseinheit bzw. dem Gehäuse der Antriebseinheit festgelegt, so dass im Falle einer Anordnung des Überrollkörpers an der Antriebseinheit dieser unbelastet ist. Diese Ausgestaltung der Antriebseinheit ermöglicht eine einfache und kostengünstige und vor allem verspannungsfreie Montage des Überrollkörpers an der Antriebseinheit.

Der Antriebsenergiespeicher kann dabei in beliebiger Weise ausgebildet sein. So ist bspw. die Verwendung eines Gasgenerators oder einer Federvorspannung denkbar, wobei im Falle der Verwendung einer Federvorspannung vorzugsweise ein durch die Federvorspannung vorgespannter Antriebskörper im Gehäuse festgelegt ist.

Die Erfindung löst die eingangs genannte Aufgabe ferner durch ein Überrollschutzsystem für Kraftfahrzeuge, das dadurch gekennzeichnet ist, dass ein Gehäuse der Antriebseinheit zur montagestabilen Anordnung des Überrollkörpers ausgebildet ist, wobei im Übrigen die Verbindung von Überrollkörper und Antriebseinheit ohne ein den Überrollkörper umgreifendes Gehäuse ausgebildet ist, so dass das Überrollschutzsystem aufgrund des Verzichts des Gehäuses besonders klein und kostengünstig sowie nur einen geringen Bauraum beanspruchend ausgebildet ist.

Ein Ausführungsbeispiel der Erfindung wird nachstehend mit Bezug auf die Zeichnungen näher erläutert. In den Zeichnungen zeigen:
- Fig. 1: eine perspektivische Ansicht eines aus einer Antriebseinheit und einem Überrollkörper gebildeten Überrollschutzsystems und

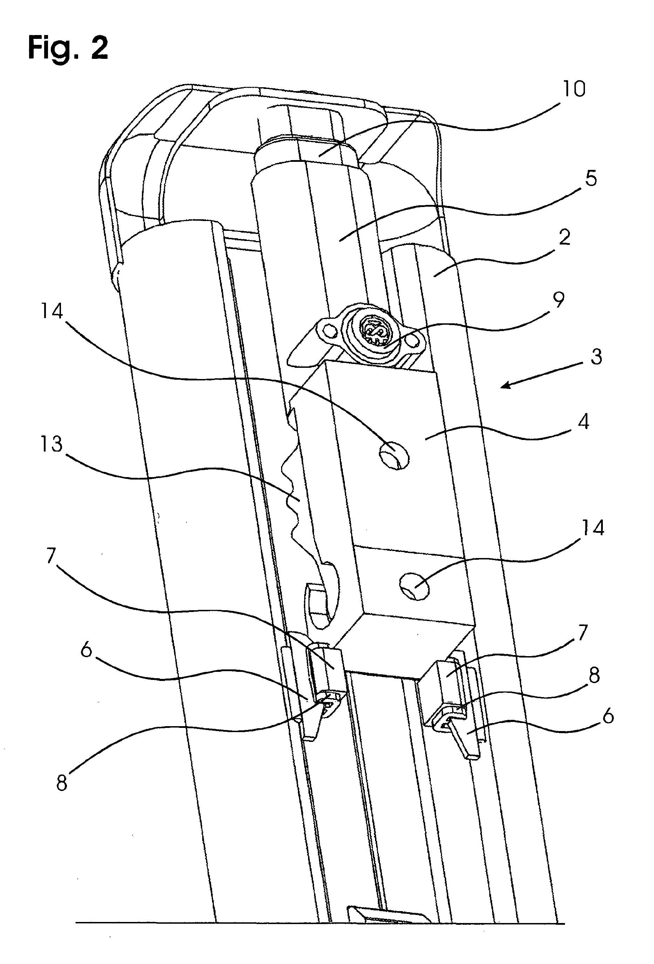

- Fig. 2: eine vergrößerte Darstellung eines oberen Bereichs des Überrollschutzsystems von Fig. 1.

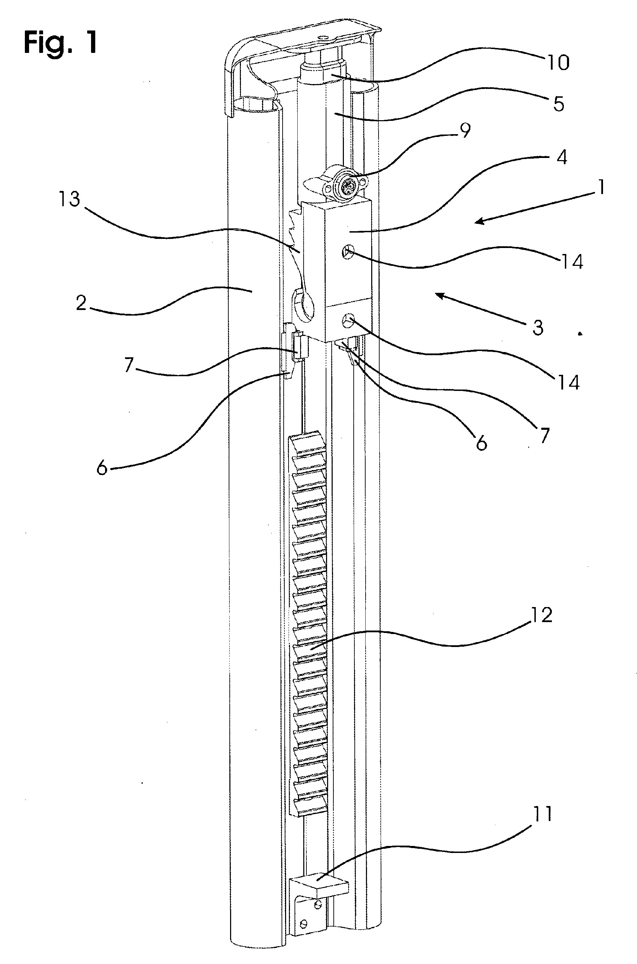

In Fig. 1 ist in einer perspektivischen Darstellung ein Überrollschutzsystem 1 dargestellt. Dieses ist aus einem Überrollkörper 2 und einer Antriebseinheit 3 gebildet, wobei der Überrollkörper 2 montagestabil mit einem Gehäuse 4 der Antriebseinheit 3 verbunden ist.

Zur montagestabilen Verbindung weist das Gehäuse 4 an seiner Unterseite Aufnahmen 7 auf, in die jeweils ein Klemmkörper 8 eingesetzt ist. Die Aufnahmen 7 und die Klemmkörper 8 weisen eine sich in Längsachsenrichtung des Überrollkörpers 2 erstreckende Vertiefung auf und dienen zur klemmenden Aufnahme von Vorsprüngen 6, welche an den Überrollkörper 2 angeklippst sind und in Richtung auf die Aufnahmen 7 vorstehen.

Darüber hinaus ist an dem Gehäuse 4 der Antriebseinheit 3 eine sich in Längsachsenrichtung des Überrollkörpers 2 erstreckende Führungshülse 5 angeordnet, in welcher in der Ruhelage ein mit dem Überrollkörper 2 verbundenes Kopplungselement 10 angeordnet ist. Über die Verbindung des Kopplungselements 10 mit der Führungshülse 5 sowie über die Vorsprünge 6 und die Aufnahmen 7 ist der Überrollkörper 2 in der in Fig. 1 dargestellten Ruhelage montagestabil an der Antriebseinheit 3 festgelegt. Bezogen auf die Einbaulage am Kraftfahrzeug ist der Überrollkörper 2 in Fahrzeuglängs-, -quer- und -hochrichtung arretiert, wobei die Arretierung jedoch einer Verlagerung im Gefahrenfall nicht blockiert.

Zur Montage des Überrollschutzsystems 1 an einer Rohbaustruktur eines Kraftfahrzeuges ist es lediglich erforderlich, die Antriebseinheit 3 über Befestigungsöffnungen 14 an dem Gehäuse 4 mit der Rohbaustruktur zu verschrauben.

Eine Verlagerung des Überrollkörpers 2 aus der in Fig. 1 dargestellten Ruhelage in eine hier nicht dargestellte Überschlagsposition, wobei der Überrollkörper 2 innerhalb der Zeichnungsebene nach oben verschoben wird, erfolgt unter Verwendung eines in die Führungshülse 5 hineinragenden Mikrogasgenerators 9, welcher als Antriebsenergiespeicher fungiert. In Folge einer Auslösung des Mikrogasgenerators 9 tritt eine Druckerhöhung im Inneren der Führungshülse 5 auf, die eine schlagartige Verlagerung des Kopplungselements 10 aus der Führungshülse 5 bewirkt. Aufgrund der Verbindung des Kopplungselements 10 mit dem Überrollkörper 2 wird dabei der Überrollkörper 2 in die Überschlagsposition verlagert.

Die Verlagerungsbewegung des Überrollkörpers 2 wird durch ein im unteren Bereich des Überrollkörpers 2 angeordnetes Anschlagelement 11 begrenzt, welches in der Überschlagsposition mit einer Unterseite des Gehäuses 4 der Antriebseinheit 3 in Eingriff gelangt und eine Weiterverlagerung des Überrollkörpers 2 blockiert. Zur Sicherung der Überschlagsposition des Überrollkörpers 2, um zu verhindern, dass der Überrollkörper 2 in Richtung auf die Ruhelage zurückverlagert wird, ist an einer der Antriebseinheit 3 zugewandten Innenseite des Überrollkörpers 2 eine Zahnstange 12 angeordnet, welche mit einem in Richtung auf die Zahnstange 12 vorgespannten Zahnstangenprofil 13 an dem Gehäuse 4 der Antriebseinheit 3 in Eingriff gelangt. In der Überschlagsposition wirken die Zahnstange 12 sowie das Zahnstangenprofil 13 zusammen, so dass die in Längsachsenrichtung auf den Überrollkörper 2 im Überschlagsfall wirkenden Lasten über das Zahnstangenprofil 13 und das Gehäuse 4 der Antriebseinheit 3 auf die Rohbaustruktur übertragen wird.

## Patentansprüche

1. Überrollschutzsystem (1) für Kraftfahrzeuge, mit
- einem aus einer Ruhelage in eine Überschlagsposition verlagerbaren Überrollkörper (2) und
- eine den Überrollkörper im Gefahrenfall aus der Ruhelage in die Überschlagsposition verstellende Antriebseinheit (3) mit einem eine zur Verstellung des Überrollkörpers notwendige Antriebsenergie aufweisenden Antriebsenergiespeicher (9) wobei,
der Überrollkörper (2) über ein zur montagestabilen Anordnung des Überrollkörpers (2) ausgebildetes Gehäuse (4) der Antriebseinheit (3) mit der Antriebseinheit (3) verbunden ist,
**dadurch gekennzeichnet, dass**
das Gehäuse (4) den Überrollkörper nicht umgreift.

2. Überrollschutzsystem nach Anspruch 1, **dadurch gekennzeichnet, dass** der Überrollkörper (2) über ein sich in einem Bereich zwischen dem Gehäuse (4) der Antriebseinheit (3) und dem Überrollkörper erstreckendes Verbindungsmittel montagestabil mit der Antriebseinheit (3) verbunden ist.

3. Überrollschutzsystem nach Anspruch 1 oder 2, **dadurch gekennzeichnet, dass** sich die Verbindungsmittel über einen Teilbereich des Überrollkörpers (2) und/oder der Antriebseinheit (3) erstrecken.

4. Überrollschutzsystem nach einem der vorhergehenden Ansprüche, **dadurch gekennzeichnet, dass** das Gehäuse (4) der Antriebseinheit (3) und/oder der Überrollkörper (2) zur Aufnahme von einem an dem Überrollkörper (2) und/oder dem Gehäuse (4) der Antriebseinheit (3) angeordneten Vorsprung (6) ausgebildet ist.

5. Überrollschutzsystem nach Anspruch 4, **dadurch gekennzeichnet, dass** der Vorsprung (6) in einer in Verstellrichtung des Überrollkörpers (2) längskanalisierten, sich über einen Teilbereich des Gehäuses (4) der Antriebseinheit (3) erstreckenden Aufnahme (7) angeordnet ist.

6. Überrollschutzsystem nach einem der vorhergehenden Ansprüche, **dadurch gekennzeichnet, dass** der Antriebskörper in einer sich über einen Teilbereich des Überrollkörpers (2) erstreckenden Führungshülse (5) angeordnet ist, wobei die Führungshülse (5) zur Aufnahme eines mit dem Überrollkörper (2) verbundenen Kopplungselements (10) ausgebildet ist.

7. Überrollschutzsystem nach einem der vorhergehenden Ansprüche, **dadurch gekennzeichnet, dass** an dem Überrollkörper (2) und/oder der Antriebseinheit (3) Anschlagmittel (11) zur Begrenzung der Ausfahrbewegung des Überrollkörpers (2) angeordnet sind.

8. Überrollschutzsystem nach einem der vorhergehenden Ansprüche, **dadurch gekennzeichnet, dass** an der Antriebseinheit (3) Verriegelungsmittel (13) zur Arretierung des Überrollkörpers (2) in der Überschlagsposition ausgebildet sind.

9. Überrollschutzsystem nach einem der vorhergehenden Ansprüche, **dadurch gekennzeichnet, dass** der Überrollkörper (2) unbelastet durch eine Vorspannung zu dessen Verlagerung montagestabil mit dem Gehäuse (4) der Antriebseinheit (3) verbunden ist.

10. Überrollschutzsystem nach einem der vorhergehenden Ansprüche, **dadurch gekennzeichnet, dass** der Antriebsenergiespeicher durch einen Gasgenerator, insbesondere Mikrogasgenerator (9) gebildet ist.

## Claims

1. A rollover protection system (1) for motor vehicles, with
- a rollover body (2) displaceable from a rest position into a rollover position and
- a drive unit (3), moving the rollover body in the event of a hazardous situation out of the rest position into the rollover position, with a drive energy store (9) having a drive energy necessary for the movement of the rollover body, wherein
the rollover body (2) is connected to the drive unit (3) via a housing (4) of the drive unit (3) designed for the securely mounted arrangement of the rollover body (2),
**characterized in that** the housing (4) does not surround the rollover body.

2. The rollover protection system according to claim 1, **characterized in that** the rollover body (2) is connected to the drive unit (3) in a securely mounted manner via a connection means extending in a region between the housing (4) of the drive unit (3) and the rollover body.

3. The rollover protection system according to claim 1 or 2, **characterized in that** the connection means extend over a partial region of the rollover body (2) and/or the drive unit (3).

4. The rollover protection system according to one of the preceding claims, **characterized in that** the housing (4) of the drive unit (3) and/or the rollover body (2) is designed for accommodating a projection (6) arranged on the rollover body (2) and/or the housing (4) of the drive unit (3).

5. The rollover protection system according to claim 4, **characterized in that** the projection (6) is arranged in a receptacle (7) extending longitudinally channeled in the movement direction of the rollover body (2) over a partial region of the housing (4) of the drive unit (3).

6. The rollover protection system according to one of the preceding claims, **characterized in that** the drive body is arranged in a guide sleeve (5) extending over a partial region of the rollover body (2), wherein the guide sleeve (5) is designed for accommodating a coupling element (10) connected to the rollover body (2).

7. The rollover protection system according to one of the preceding claims, **characterized in that** stop means (11) are arranged on the rollover body (2) and/or the drive unit (3) for limiting the extension movement of the rollover body (2).

8. The rollover protection system according to one of the preceding claims, **characterized in that** locking means (13) are formed on the drive unit (3) for locking the rollover body (2) in the rollover position.

9. The rollover protection system according to one of the preceding claims, **characterized in that** the rollover body (2) is connected in a securely mounted manner to the housing (4) of the drive unit (3) without being pretensioned for displacement thereof.

10. The rollover protection system according to one of the preceding claims, **characterized in that** the drive energy store is formed by a gas generator, in particular a micro gas generator (9).

## Revendications

1. Système de protection contre les tonneaux (1) pour des véhicules automobiles, avec
- un corps de protection contre les tonneaux (2) apte à passer d'une position de repos à une position de tonneau, et
- une unité d'entraînement (3) déplaçant le corps de protection contre les tonneaux de la position de repos à la position de tonneau en cas de danger, avec un accumulateur d'énergie d'entraînement (9) comportant une énergie d'entraînement nécessaire pour le déplacement du corps de protection contre les tonneaux, dans lequel
le corps de protection contre les tonneaux (2) est relié à l'unité d'entraînement (3) par le biais d'un boîtier (4) de l'unité d'entraînement (3) conçu pour l'agencement à montage stable du corps de protection contre les tonneaux (2),
**caractérisé en ce que**
le boîtier (4) n'entoure pas le corps de protection contre les tonneaux.

2. Système de protection contre les tonneaux selon la revendication 1, **caractérisé en ce que** le corps de protection contre les tonneaux (2) est relié de façon stable au montage à l'unité d'entraînement (3) par le biais d'un moyen d'assemblage s'étendant dans une région entre le boîtier (4) de l'unité d'entraînement (3) et le corps de protection contre les tonneaux.

3. Système de protection contre les tonneaux selon la revendication 1 ou 2, **caractérisé en ce que** les moyens d'assemblage s'étendent sur une région partielle du corps de protection contre les tonneaux (2) et/ou de l'unité d'entraînement (3).

4. Système de protection contre les tonneaux selon l'une des revendications précédentes, **caractérisé en ce que** le boîtier (4) de l'unité d'entraînement (3) et/ou le corps de protection contre les tonneaux (2) est/sont conçu(s) pour recevoir une saillie (6) agencée sur le corps de protection contre les tonneaux (2) et/ou le boîtier (4) de l'unité d'entraînement (3).

5. Système de protection contre les tonneaux selon la revendication 4, **caractérisé en ce que** la saillie (6) est agencée dans une admission (7) s'étendent sur une région partielle du boîtier (4) de l'unité d'entraînement (3) et canalisé en longueur dans une direction de réglage du corps de protection contre les tonneaux (2).

6. Système de protection contre les tonneaux selon l'une des revendications précédentes, **caractérisé en ce que** le corps d'entraînement est agencé dans une douille de guidage (5) s'étendant sur une région partielle du corps de protection contre les tonneaux (2), dans lequel la douille de guidage (5) est conçue pour l'admission d'un élément d'accouplement (10) relié au corps de protection contre les tonneaux (2).

7. Système de protection contre les tonneaux selon l'une des revendications précédentes, **caractérisé en ce que** des moyens de butée (11) sont agencés sur le corps de protection contre les tonneaux (2) et/ou l'unité d'entraînement (3) pour délimiter le mouvement de déploiement du corps de protection contre les tonneaux (2).

8. Système de protection contre les tonneaux selon l'une des revendications précédentes, **caractérisé en ce que** des moyens de verrouillage (13) sont formés sur l'unité d'entraînement (3) pour le blocage du corps de protection contre les tonneaux (2) dans la position de tonneau.

9. Système de protection contre les tonneaux selon l'une des revendications précédentes, **caractérisé en ce que** le corps de protection contre les tonneaux (2) est relié au boîtier (4) de l'unité d'entraînement (3) de façon stable au montage, sans une précontrainte en vue de son déplacement.

10. Système de protection contre les tonneaux selon l'une des revendications précédentes, **caractérisé en ce que** l'accumulateur d'énergie d'entraînement est constitué d'un générateur de gaz, en particulier d'un microgénérateur de gaz(9).
